# EUROPÄISCHE PATENTANMELDUNG

(11) **EP 3 144 254 A1**
(43) Veröffentlichungstag der Anmeldung: **22.03.2017**
(21) Anmeldenummer: 16189118.9
(22) Anmeldetag: 16.09.2016
(51) Int. Cl.: B65G 35/00, B65G 47/29, B65G 47/88, B65G 47/96

(54) **SAMMELEINRICHTUNG FÜR EINEN FÖRDERER**

(30) Priorität: 17.09.2015 CH 13512015
(71) Anmelder: WRH Walter Reist Holding AG, 8272 Ermatingen (CH)
(72) Erfinder: Mäder, Carl Conrad, 8335 Hittnau (CH); Wiasmitinow, Alexis, 8404 Winterthur (CH)
(74) Vertreter: Frei Patent Attorneys

(57) **Zusammenfassung**

Die Erfindung betrifft eine Sammeleinrichtung (1.1) zum Sammeln von Stückgütern (2), welche von einem Förderer (3) an eine Abgabestelle (4) abgegeben werden. Die Sammeleinrichtung (1.1) enthält einen Sammelbereich (C) mit einer Sammelvorrichtung (5), in welchem die Stückgüter (2) gesammelt werden, einen dem Sammelbereich (C) vorausgehenden Verzögerungsbereich (B) mit einer Stückgutauflage (6.1), in welchem die vom Förderer (3) abgegebenen Stückgüter (2) aufgehalten werden, und einen dem Verzögerungsbereich (B) vorausgehenden Zuführbereich (A) mit einer Zuführvorrichtung (7), über welchen die Stückgüter (2) vom Förderer (3) dem Verzögerungsbereich (B) zugeführt werden. Der Verzögerungsbereich (B) umfasst einen Fördermechanismus (8.1), welcher in der Lage ist, das aufgehaltene Stückgut (2) mittels einer förderaktiven Bewegung vom Verzögerungsbereich (B) in den Sammelbereich (C) zu fördern.

## Beschreibung

Die Erfindung liegt auf dem Gebiet der Förder- und Sortiertechnik und betrifft eine Sammeleinrichtung für einen Förderer zum Sammeln von Stückgütern, welche von einem Förderer an eine Abgabestelle abgegeben werden.

Ferner betrifft die Erfindung eine Förderanlage mit einem Förderer zum Fördern von Stückgütern und einer Sammeleinrichtung sowie ein Verfahren zum Betreiben der Sammeleinrichtung.

Förderer mit Sammeleinrichtungen, insbesondere Sortieranlagen, dienen dazu, entlang einer Förderstrecke geförderte Stückgüter durch Abgabe der Stückgüter an verschiedenen, entlang der Förderstrecke angeordneten Abgabestellen, nach definierten Kriterien, wie z. B. Produktgleichheit, zu sortieren. Hierzu werden die Stückgüter über eine Steuerung an den entsprechenden Abgabestellen gezielt vom Förderer an Sammeleinrichtungen abgegeben. Die Stückgüter werden dabei von den Abgabestellen zu einem Sammelbereich der Sammeleinrichtungen gefördert. Die Förderung zwischen Abgabestelle und Sammelbereich erfolgt in der Regel ungeführt und passiv.

Passive Förderung bedeutet, dass die Stückgüter alleine durch ihre vom Förderer mitgegebene kinetische Energie und/oder durch Schwerkraftunterstützung gefördert werden. D.h., es sind keine aktiv angetriebenen Förderorgane vorgesehen, welche die Stückgüter fördern. So ist es beispielsweise bekannt, Stückgüter über Rutschen von der Abgabestelle in den Sammelbereich zu fördern.

Die ungeführte Förderung der Stückgüter von der Abgabestelle zum Sammelbereich bedeutet, dass sich die Geschwindigkeit und fallweise auch der exakte Bewegungsweg der Stückgüter nicht kontrollieren lassen.

Es sollen nun auch empfindliche Stückgüter, wie z. B. Flaschen, in Sortieranlagen mit Sammeleimichtungen der oben genannten Art verarbeitet werden können. Herkömmliche Sammeleinrichtungen weisen jedoch den Nachteil auf, dass die empfindlichen Stückgüter bei der ungeführten Förderung von der Abgabestelle in den Sammelbereich zusammenstossen und beschädigt werden können. Ferner ist es auch möglich, dass ungeführte Stückgüter beim Eintreffen in den Sammelbereich mit anderen Stückgütern im Sammelbereich zusammenstossen und ebenfalls beschädigt werden können. Eine Beschädigungen von ungeführt geförderten, empfindlichen Stückgütern kann ferner auch dann auftreten, wenn diese mit Teilen der Sammeleinrichtung zusammenstossen.

Ein weiterer Nachteil liegt ferner darin, dass Stückgüter, welche nicht in einer Transportverpackung sondern beispielsweise in der Verkaufsverpackung oder ohne Verpackung vorliegen, in der Sammeleinrichtung durch Zusammenstösse mit anderen Stückgütern oder mit Teilen der Sammeleinrichtung Gebrauchsspuren annehmen und dadurch ihr neuwertiges Aussehen verlieren können, obwohl diese noch neuwertig sind.

Ferner kann durch solche Zusammenstösse auch eine empfindliche Verkaufspackung, in welche die Produkte eingepackt sind, beschädigt werden oder Gebrauchsspuren erlangen. Dies führt dazu, dass sich die Produkte gar nicht mehr oder nicht mehr als neuwertig verkaufen lassen.

Es ist deshalb eine Aufgabe vorliegender Erfindung, eine Sammeleinrichtung vorzuschlagen, welche eine schonende Förderung der Stückgüter von der Abgabestelle zum Sammelbereich der Sammeleinrichtung ermöglicht.

Die erfindungsgemässe Sammeleinrichtung zeichnet sich nun dadurch aus, dass diese folgende Bereiche umfasst:
- einen Sammelbereich mit einer Sammelvorrichtung, in welchem die Stückgüter gesammelt werden;
- einen dem Sammelbereich vorausgehenden Verzögerungsbereich mit einer Stückgutauflage, in welchem die vom Förderer abgegebenen Stückgüter aufgehalten werden, und
- einen dem Verzögerungsbereich vorausgehenden Zuführbereich mit einer Zuführvorrichtung, über welchen die Stückgüter von der Abgabestelle dem Verzögerungsbereich zugeführt werden.

Zuführbereich, Verzögerungsbereich und Sammelbereich sind insbesondere unmittelbar aufeinanderfolgend angeordnet.

Die Zuführvorrichtung kann Führungsmittel umfassen, über welche die Stückgüter passiv in den Verzögerungsbereich gefördert werden. Solche Führungsmittel können z. B. eine Förderrutsche umfassen.

Der Verzögerungsbereich ist insbesondere so ausgelegt, dass das von der Zuführvorrichtung zugeförderte Stückgut abgebremst und im Verzögerungsbereich aufgehalten wird.

Das Stückgut kommt dabei auf der Stückgutauflage zu liegen. Die Stückgutauflage bildet hierzu eine Auflagefläche aus.

Die Stückgutauflage kann ein- oder mehrteilig ausgebildet sein.

Der Begriff "Aufhalten" bedeutet dabei, dass die Fördergeschwindigkeit des Stückgutes im Verzögerungsbereich gegenüber dem Zuführbereich reduziert ist und somit die (Weiter-) Förderung des Stückgutes im Verzögerungsbereich verzögert wird. Das Stückgut kann dabei im Verzögerungsbereich zum Stillstand kommen.

Die Stückgutauflage hat dabei die Aufgabe, das Stückgut schonend aufzunehmen, bevor dieses in den Sammelbereich weitergefördert wird.

Der Verzögerungsbereich umfasst nun einen Fördermechanismus, welcher in der Lage ist, das aufgehaltene Stückgut mittels einer förderaktiven Bewegung vom Verzögerungsbereich, insbesondere von dessen Stückgutauflage, in den Sammelbereich zu fördern. Die Förderung erfolgt insbesondere aktiv.

Der Fördermechanismus weist insbesondere mindestens ein förderaktives Vortriebsorgan auf, welches so wirkt, dass das aufgehaltene Stückgut in Förderrichtung weiterbewegt wird. Das förderaktive Vortriebsorgan übt hierzu eine förderaktive Bewegung aus.

Das mindestens eine förderaktive Vortriebsorgan kann direkt oder indirekt auf das Stückgut wirken.

Gemäss einer Weiterbildung der Erfindung umfasst die förderaktive Bewegung des mindestens einen förderaktiven Vortriebsorgans mindestens einen Bewegungsabschnitt mit einer, der Schwerkraft entgegen gerichteten, vertikalen Bewegungskomponente.

Das mindestens eine förderaktive Vortriebsorgan ist während der Ausführung der förderaktiven Bewegung in Förderrichtung betrachtet insbesondere hinter dem zu fördernden Stückgut angeordnet.

Der Fördermechanismus ist insbesondere so ausgelegt, dass das mindestens eine förderaktive Vortriebsorgan während der Ausführung der förderaktiven Bewegung in Förderrichtung betrachtet von hinten zum Stückgut hin bewegbar ist.

Der Fördermechanismus ist hierzu insbesondere so ausgelegt, dass das mindestens eine förderaktive Vortriebsorgan mindestens über einen Bewegungsabschnitt seiner förderaktiven Bewegung sowohl eine, der Schwerkraft entgegen gerichtete, vertikale und als auch eine in Förderrichtung gerichtete horizontale Bewegungskomponente umfasst.

Gemässe einer bevorzugten Variante dieser Ausführungsform weist das mindestens eine förderaktive Vortriebsorgan mindestens über einen Bewegungsabschnitt seiner förderaktiven Bewegung beide Bewegungskomponenten gleichzeitig auf.

Der besagte Bewegungsabschnitt ist insbesondere zu Beginn der förderaktiven Bewegung angeordnet.

Der Fördermechanismus ist insbesondere zur Ausführung einer zyklischen Bewegung durch das mindestens eine förderaktive Vortriebsorgan ausgelegt. Eine zyklische Bewegung zeichnet sich durch seine Wiederholbarkeit aus. Die zyklische Bewegung kann z. B. eine Umlaufbewegung oder lineare Hin-und-her-Bewegung sein.

Die förderaktive Bewegung des Fördermechanismus bzw. des mindestens einen förderaktiven Vortriebsorgans kann periodisch sein. Entsprechend werden die Stückgüter getaktet der Verzögerungsvorrichtung zugeführt.

Der Fördermechanismus kann einen Rundlauf, insbesondere eine Rotationseinrichtung, umfassen, in welchem das mindestens eine förderaktive Vortriebsorgan entlang einer geschlossenen Bewegungsbahn bewegt wird.

Das mindestens eine förderaktive Vortriebsorgan kann insbesondere um eine Achse rotierend angeordnet sein.

Die Achse ist insbesondere unterhalb des Bewegungsweges des Stückgutes angeordnet. Die Achse ist insbesondere quer zur Förderrichtung angeordnet. Die Achse ist insbesondere auch quer zur Vertikalen angeordnet.

Der Fördermechanismus bzw. das mindestens eine förderaktive Vortriebsorgan wird insbesondere mittels eines Antriebes, z. B. umfassend einen Elektromotor, aktiv angetrieben. D.h., das Stückgut wird mittels des Fördermechanismus aktiv gefördert.

Der Antrieb wird insbesondere über eine Steuerungsvorrichtung gesteuert. Die Sammeleinrichtung bzw. die Sortieranlage kann Sensoren enthalten, welche zum Beispiel die Abgabe eines Stückgutes an eine Sammeleinrichtung erfassen. Der Antrieb des Fördermechanismus lässt sich nun auf Basis der Sensordaten über die Steuerungsvorrichtung steuern.

Die Erfindung betrifft im Weiteren auch ein Verfahren zum Sammeln von Stückgütern, welche von einem Förderer an eine Abgabestelle einer erfindungsgemässen Sammeleinrichtung übergeben werden.

Das Verfahren zeichnet sich durch folgende Schritte aus:
- Zuführen eines Stückgutes von der Zuführvorrichtung eines Zuführbereichs zur Stückgutauflage eines Verzögerungsbereichs und Aufhalten, insbesondere auch Abbremsen des Stückgutes im Verzögerungsbereich;
- Einwirken auf das Stückgut mittels eines, im Verzögerungsbereich eine förderaktive Bewegung ausführenden Fördermechanismus, wodurch das Stückgut von der Stückgutauflage im Verzögerungsbereich in den Sammelbereich gefördert wird.

Die Stückgüter können auf der Stückgutauflage gleiten, rutschen oder rollen.

Die Stückgüter werden insbesondere einzeln dem Verzögerungsbereich zugefördert, so dass nicht zwei Stückgüter miteinander kollidieren können. Die Stückgüter können allerdings auch in Gruppen von mehreren Stückgütern dem Verzögerungsbereich zugefördert werden.

Gemäss einer Weiterbildung wird das mindestens eine Vortriebsorgan des Fördermechanismus in Förderrichtung betrachtet während mindestens eines Bewegungsabschnittes seiner förderaktiven Bewegung mit einer entgegen der Schwerkraft gerichteten, vertikalen Bewegungskomponente hinter dem auf der Stückgutauflage aufgehaltenen Stückgut nach oben bewegt.

Gemäss einer weiteren Weiterbildung des Verfahrens wird das mindestens eine Vortriebsorgan in Förderrichtung betrachtet während seiner förderaktiven Bewegung zusätzlich mit einer in Förderrichtung gerichteten horizontalen Bewegungskomponente zum Stückgut hin bewegt wird.

Ist das Vortriebsorgan um eine Achse drehbar gelagert, so bewegt sich bzw. rotiert das Vortriebsorgan während seiner förderaktiven Bewegung um die Achse.

Das Stückgut ist im Verzögerungsbereich auf der Stückgutauflage angeordnet.

Die Stückgutauflage kann eine Krümmung mit einem ansteigenden Krümmungsabschnitt ausbilden. Der Begriff "ansteigend" bedeutet eine Steigung entgegen der Schwerkraftrichtung.

Die Krümmung kann, mit Blick auf die Auflagefläche, einen konkaven oder konvexen Krümmungsabschnitt beinhalten.

Die Stückgutauflage kann insbesondere eine Aufnahmemulde für das Stückgut ausbilden.

Gemäss einer ersten Ausführungsvariante der Erfindung ist die Stückgutauflage ein flexibles, flächenförmiges Auflageorgan.

Flexibel bedeutet, dass die Stückgutauflage, insbesondere ohne plastische Verformung, biegsam bzw. nachgiebig ist. Die Biegsamkeit kann auch durch Gelenke erfolgen. Die Stückgutauflage kann alleine aufgrund der Schwerkraftwirkung biegsam sein. Flexibel kann auch bedeuten, dass die Stückgutauflage tordierbar ist.

Flächenförmig bedeutet, dass die Flächenausdehnung (Breite und Länge) des Auflageorganes um ein Vielfaches grösser ist als seine Höhenausdehnung (Dicke).

Die Aufnahmemulde wird gemäss dieser Ausführungsvariante insbesondere zwischen zwei in Förderrichtung hintereinander angeordneten Stütz- bzw. Befestigungsstellen, an welchen das Auflageorgan abgestützt ist, ausgebildet. Die Stützstellen sind entsprechend voneinander beabstandet.

Die Stückgutauflage ist im Bereich der Aufnahmemulde beispielsweise durchhängend, insbesondere frei durchhängend, angeordnet.

Der Verzögerungsbereich entspricht gemäss dieser Ausführungsordnung einem Auffangbereich, in welchem das zugeführte Stückgut durch die Aufnahmemulde abgebremst und aufgefangen bzw. aufgenommen wird.

Der Fördermechanismus gemäss dieser Ausführungsvariante ist dazu ausgelegt, das flexible, flächenförmige Auflageorgan während seiner förderaktiven Bewegung im Bereich der Krümmung, insbesondere der Aufnahmemulde so anzuheben, dass ein im Bereich der Krümmung bzw. in der Aufnahmemulde liegendes Stückgut durch das Anheben des Auflageorgans in Förderrichtung weitergefördert wird.

Der Fördermechanismus gemäss dieser Ausführungsvariante ist insbesondere dazu ausgelegt, das flexible, flächenförmige Auflageorgan über seine gesamte Breite anzuheben. Das Auflageorgan wird insbesondere gleichmässig über die gesamte Breite angehoben.

Bei der Weiterförderung liegt das Stückgut dem Auflageorgan insbesondere weiterhin auf.

In Ausführung des Verfahrens hebt also der Fördermechanismus bzw. das mindestens eine förderaktive Vortriebsorgan das flexible, flächenförmige Auflageorgan durch seine förderaktive Bewegung im Bereich der Krümmung bzw. der Aufnahmemulde von unten an, und fördert so das im Bereich der Krümmung, insbesondere das in der Aufnahmemulde angeordnete Stückgut in Förderrichtung.

Das Auflageorgan wird dabei in Förderrichtung insbesondere nicht angetrieben. Das heisst, das Auflageorgan bleibt in Förderrichtung stationär.

Der Fördermechanismus bzw. das mindestens eine förderaktive Vortriebsorgan hebt dabei das Auflageorgan während des Fördervorganges hinter dem sich auf dem Auflageorgan in Förderrichtung bewegenden Stückgut an.

Der Fördermechanismus bzw. das mindestens eine förderaktive Vortriebsorgan hebt dabei das Auflageorgan während des Fördervorganges in Förderrichtung betrachtet insbesondere hinter der tiefsten Stelle der Krümmung bzw. der Aufnahmemulde an. Der Fördermechanismus ist insbesondere dazu ausgelegt, das flexible, flächenförmige Auflageorgan wellenartig zu bewegen. Die wellenartige Bewegung des Auflageorgans erfolgt insbesondere in Förderrichtung.

Der Fördermechanismus bzw. das mindestens eine förderaktive Vortriebsorgan hebt das Auflageorgan während seiner förderaktiven Bewegung insbesondere im Bereich der Krümmung bzw. der Aufnahmemulde in einer sich in Förderrichtung fortpflanzenden Hebebewegung an. Die fortschreitende Hebebewegung bewirkt insbesondere die oben genannte wellenartige Bewegung des Auflageorgans in Förderrichtung.

Weist nämlich die förderaktive Bewegung des mindestens einen förderaktiven Vortriebsorgans neben der genannten vertikalen Bewegungskomponente auch eine in Förderrichtung gerichtete horizontale Bewegungskomponente auf, so pflanzt sich das Anheben des Auflageorgans in Förderrichtung fort. Das Stückgut wird dabei vor dem angehobenen Abschnitt der Stückgutauflage bzw. vor dem Vortriebsorgan her in Förderrichtung bewegt.

Das mindestens eine förderaktive Vortriebsorgan wird nun in Ausführung der förderaktiven Bewegung in Förderrichtung betrachtet hinter dem auf der Stückgutauflage aufgehaltenen Stückgut nach oben bewegt. Dadurch wird das Auflageorgan hinter dem Stückgut im Bereich der Krümmung, insbesondere der Auffangmulde angehoben.

Durch eine weitere horizontale Bewegungskomponente in Förderrichtung, wird das mindestens eine förderaktive Vortriebsorgan zudem von hinten an das Stückgut heran beweg. Dadurch wird das Auflageorgan in Förderrichtung fortlaufend angehoben. Das Stückgut wird so in Richtung Sammelbereich vorgetrieben bzw. gefördert und diesem übergeben.

Das mindestens eine förderaktive Vortriebsorgan wird nach Abschluss der förderaktiven Bewegung mit einer vertikalen Bewegungskomponente in Schwerkraftrichtung nach unten bewegt und mit einer horizontalen Bewegungskomponente entgegen der Förderrichtung in seine Ausgangsposition weiter bewegt.

Das mindestens eine förderaktive Vortriebsorgan kann z. B. eine um eine Achse in radialem Abstand zu dieser rotierende Kurbel bzw. Arm sein, welche das Auflageorgan durch die Rotationsbewegung um die Achse von unten anhebt.

Das flexible, flächenförmige Auflageorgan kann bandförmig sein. Das Auflageorgan kann ein Band, eine Folie oder ein Netz sein.

Das flexible, flächenförmige Auflageorgan kann aus einem textilen Flächengebilde wie Gewebe sein. Das flexible, flächenförmige Auflageorgan kann auch aus miteinander verketteten Elementen sein, und z. B. als Mattenkette vorliegen.

Gemäss einer zweiten Ausführungsvariante der Erfindung weist die Stückgutauflage mindestens eine Ausnehmung auf, durch welche das mindestens eine förderaktive Vortriebsorgan während der Ausführung einer förderaktiven Bewegung auf das Stückgut wirkt.

Das mindestens eine förderaktive Vortriebsorgan ist während der Ausführung einer förderaktiven Bewegung insbesondere mit einer vertikalen Bewegungskomponente durch die mindestens eine Ausnehmung hindurch bewegbar.

Das mindestens eine förderaktive Vortriebsorgan ist in Ausführung der förderaktiven Bewegung insbesondere von unterhalb der Auflagefläche durch die mindestens eine Ausnehmung hindurch über die Auflagefläche der Stückgutauflage bewegbar.

D.h., das mindestens eine förderaktive Vortriebsorgan ist von unten nach oben durch die Ausnehmungen hindurch bewegbar.

Das mindestens eine förderaktive Vortriebsorgan ist in Ausführung einer umlaufenden Bewegung insbesondere auch wieder von oben nach unten durch die mindestens eine Ausnehmung hindurch weiter bewegbar.

Der Fördermechanismus kann mehrere förderaktive Vortriebsorgane enthalten, welche, wie oben beschrieben, durch eine Ausnehmung im Auflageorgan hindurch jeweils auf ein Stückgut wirken.

Das Auflageorgan kann mehrere Ausnehmungen enthalten, durch welche jeweils ein förderaktives Vortriebsorgan bzw. ein Vortriebselement des förderaktiven Vortriebsorgans wirkt.

Die Stückgutauflage gemäss der zweiten Ausführungsvariante ist insbesondere starr ausgebildet. Die Stückgutauflage kann ein plattenförmiges Element sein.

Die Stückgutauflage kann eine ebene Auflagefläche ausbilden. Die Auflagefläche kann auch gekrümmt sein.

Die Auflagefläche kann horizontal sein. Die Auflagefläche kann auch geneigt sein.

Das mindestens eine förderaktive Vortriebsorgan gemäss der zweiten Ausführungsvariante kann eine Mehrzahl von quer zur Förderrichtung voneinander beabstandet angeordnete Vortriebselemente enthalten, welche jeweils durch einen Ausnehmung in der Stückgutauflage hindurch bewegbar sind.

Die mindestens eine Ausnehmung ist insbesondere eine parallel zur Förderrichtung ausgerichtete Schlitzöffnung. Bei mehreren Ausnehmungen können die Schlitzöffnungen parallel nebeneinander und voneinander beabstandet angeordnet sein.

Ist das mindestens eine förderaktive Vortriebsorgan bzw. sind dessen Vortriebselemente um eine Achse rotierbar angeordnet, so führt das mindestens eine förderaktive Vortriebsorgan bzw. führen dessen Vortriebselemente insbesondere radial von der Achse nach aussen weg.

Das mindestens eine förderaktive Vortriebsorgan kann mehrere nebeneinander entlang der Achse angeordnete Vortriebselemente aufweisen. Das mindestens eine förderaktive Vortriebsorgan bildet auf diese Weise eine so genannte Vortriebsleiste aus.

Es können mehrere förderaktive Vortriebsorgane, insbesondere Vortriebsleisten voneinander beabstandet und radial ausgerichtet um die Achse angeordnet sein.

Die Vortriebselemente bzw. das mindestens eine förderaktive Vortriebsorgan sind z. B. nachgiebig, insbesondere elastisch ausgebildet, um so den Förderkontakt zum Stückgut zu dämpfen.

Die Vortriebselemente können stabförmig oder borstenförmig sein.

Der Fördermechanismus kann insbesondere eine um eine Achse rotierbare Förderbürste mit mehreren Bürstenleisten umfassen.

Das mindestens eine förderaktive Vortriebsorgan wird nun in Ausführung der förderaktiven Bewegung in Förderrichtung betrachtet hinter dem, auf der Stückgutauflage aufgehaltenen Stückgut durch die Ausnehmungen in der Stückgutauflage nach oben bewegt.

Durch eine weitere horizontale Bewegungskomponente in Förderrichtung wird das mindestens eine förderaktive Vortriebsorgan zudem von hinten an das Stückgut heran bewegt bis dieses mit dem Stückgut einen Förderkontakt ausbildet. Das Stückgut wird nun durch das von hinten angreifende Vortriebsorgan in Richtung Sammelbereich gefördert bzw. geschoben und diesem übergeben.

Das Vortriebsorgan wird im Anschluss an die förderaktive Bewegung mit einer vertikalen Bewegungskomponente in Schwerkraftrichtung durch die Ausnehmungen in der Stückgutauflage nach unten weiter bewegt und mit einer horizontalen Bewegungskomponente entgegen der Förderrichtung in seine Ausgangsposition weiter bewegt.

In seiner passiven Position, in welcher das Vortriebsorgan keine förderaktive Bewegung ausführt sondern wieder in seine Ausgangsposition weiter bewegt wird, ist dieses insbesondere unterhalb der durch die Stückgutauflage ausgebildeten Auflagefläche angeordnet.

Die Stückgüter werden gemäss vorliegender Erfindung im Sammelbereich gesammelt bis diese für weitere Verarbeitungsschritte wieder aus dem Sammelbereich abgeführt werden. Der Sammelbereich kann beispielsweise einen Sammeltisch oder einen Sammelbehälter für die Stückgüter umfassen.

Der zwischen Zuführ- und Sammelbereich angeordnete Verzögerungsbereich erlaubt ein schonendes Abbremsen und Aufhalten der Stückgüter. Dies geschieht, indem das passiv geförderte Stückgut durch die vorherrschende Gleitreibung selbsttätig gebremst wird und/oder durch flexible Elemente, wie Vorschubelemente oder Auflageorgan, im Verzögerungsbereich schonend gebremst wird.

Ein schonendes Bremsen geschieht beispielsweise gemäss der ersten Ausführungsvariante indem das Stückgut in die Aufnahmemulde bewegt wird. Durch die flexible Ausgestaltung des Auflageorgans wird das Stückgut in der nachgiebigen Aufnahmemulde schonend aufgefangen bzw. aufgenommen. Zudem erlaubt die durch einen frei durchhängenden Abschnitt des flexiblen, flächenförmigen Auflageorgans ausgebildete Aufnahmemulde ein schonendes Auspendeln der Zuförderbewegung und dadurch Reduzieren der Bewegungsenergie des Stückgutes.

Ein schonendes Abbremsen kann z. B. gemäss der zweiten Ausführungsvariante dadurch geschehen, indem die Stückgüter im Verzögerungsbereich auf das flexible Vortriebsorgan auflaufen und so gedämpft abgefedert werden.

Es kann allerdings auch vorgesehen sein, dass das aus dem Zuführbereich der Auflagefläche der Stückgutauflage zugeführte Stückgut alleine durch Gleitreibung auf der Stückgutauflage abgebremst und ggf. angehalten wird.

Die Erfindung betrifft ferner auch eine Sortieranlage mit einem Förderer und mit mindestens einer erfindungsgemässen Sammeleinrichtung.

Der Förderer zeichnet sich insbesondere dadurch aus, dass dieser die Stückgüter einzeln bzw. vereinzelt fördert. Der Förderer kann die Stückgüter allerdings auch in Gruppen von mehreren Stückgütern fördern.

Der Förderer kann z. B. ein Sortierförderer sein, welcher zum Sortieren von Stückgütern ausgelegt ist und sich durch eine Mehrzahl von Abgabestellen auszeichnet, an welchen die Stückgüter vom Sortierförderer einer Sammeleinrichtung übergeben werden können.

Der Förderer kann z. B. eine Mehrzahl von Fördermitteln enthalten, welche jeweils ein Stückgut fördern.

Der Förderer kann z. B. ein Kippschalenförderer sein. Die Fördermittel sind hier Kippschalen, welche zur Abgabe der Produkte an den jeweiligen Abgabestellen gekippt bzw. geschwenkt werden.

Der Förderer kann ferner auch ein Greiferförderer sein. Der Förderer kann auch ein Hängeförderer sein.

Der Förderer kann ferner auch ein Bandförderer, wie Modulbandförderer, mit Ausschleusstationen zum Ausschleusen der Stückgüter an den entsprechenden Abgabestellen sein. Der Förderer kann auch ein Quergutförderer sein.

Die Sortieranlage umfasst bevorzugt mehrere entlang des Förderweges des Förderers angeordnete Sammeleinrichtungen. Der Förderer umfasst hierbei mindestens eine, insbesondere eine Mehrzahl von Abgabestellen, welchen jeweils eine Sammeleinrichtung zugeordnet ist.

Die erfindungsgemässe Sammeleinrichtung findet insbesondere bei der Verarbeitung von Produktrückläufen von Verkaufsstellen Verwendung. Solche Produktrückläufe finden beispielsweise bei Rückrufaktionen, Kundenrückgaben, beim Abbau von Lagerbeständen oder bei Sortimentswechsel statt.

In der Regel werden die Stückgüter, d.h. die Produkte, unsortiert von den Verkaufsstellen zurückgegeben. Mittels der Sortieranlage werden nun die Produkte wieder sortenrein bzw. nach bestimmten gemeinsamen Merkmalen sortiert.

Die Produkte können Stückgüter aus dem Konsumgüterbereich sein, wie z. B. Kosmetikartikel, Körperpflegeartikel, Medikamente, Nahrungsmittel, etc.

Die Produkte können als Flaschen, Dosen, Tuben, Beutel, Schachteln, Boxen, etc. vorliegen. Die Produkte können in Verkaufspackungen verpackt sein.

Im Folgenden wird der Erfindungsgegenstand anhand von Ausführungsbeispielen, welche in den beiliegenden Figuren dargestellt sind, näher erläutert. Es zeigen jeweils schematisch:
- Figur 1: eine perspektivische Ansicht von schräg unten einer Ausführungsform einer Sammeleinrichtung mit einem Fördermechanismus im Verzögerungsbereich gemäss der ersten Ausführungsvariante;
- Figur 2: Seitenansicht von Teilen der Sammeleinrichtung nach Figur 1;
- Figur 3a-3d: Seitenansichten der Sammeleinrichtung nach Figur 1 und 2 mit dem Fördermechanismus in verschiedenen Vortriebsstellungen;
- Figur 4: eine perspektivische Ansicht einer Ausführungsform einer Sammeleinrichtung mit einem Fördermechanismus im Verzögerungsbereich gemäss der zweiten Ausführungsvariante;
- Figur 5a-5d: Seitenansichten der Sammeleinrichtung nach Figur 4 mit dem Fördermechanismus in verschiedenen Vortriebsstellungen.

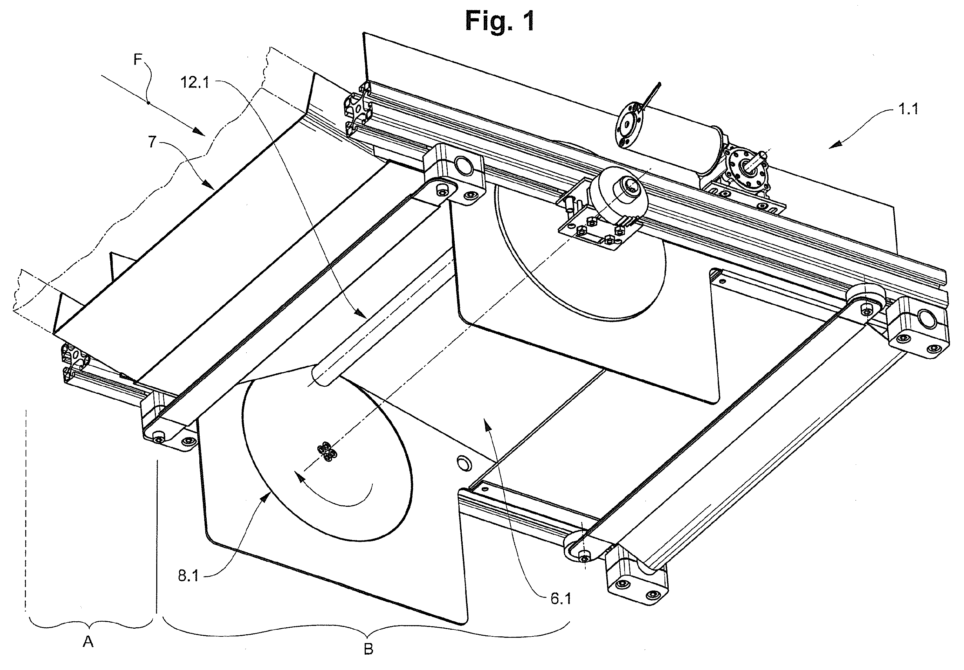

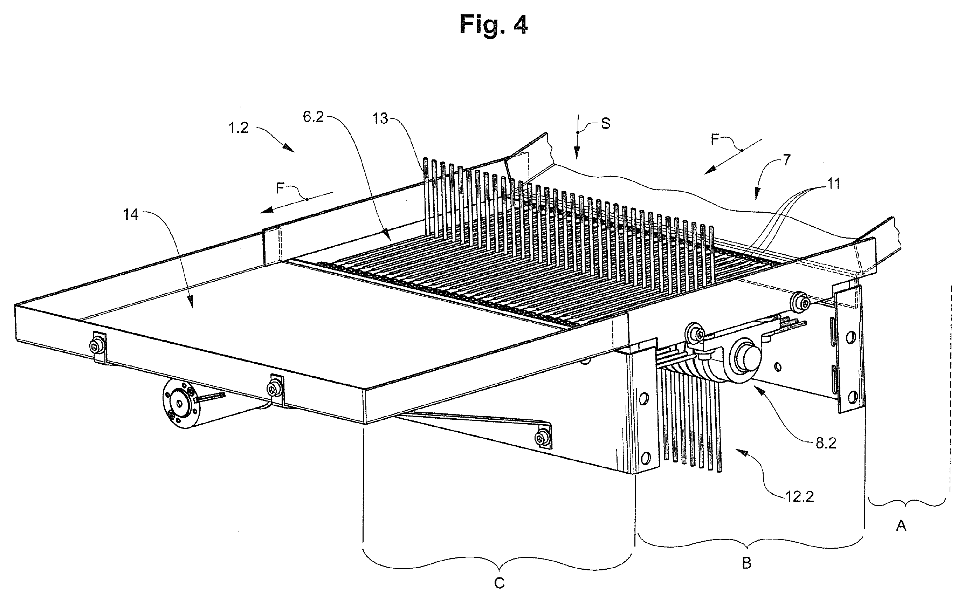

Die Sammeleinrichtung 1.1, 1.2 gemäss den Figuren 1 und 4 umfassen jeweils einen Zuförderbereich A mit einer Zuführvorrichtung 7. Die Zuführvorrichtung 7 umfasst jeweils eine Förderrutsche, über welche die Stückgüter 2 insbesondere einzeln dem Verzögerungsbereich B zugefördert werden.

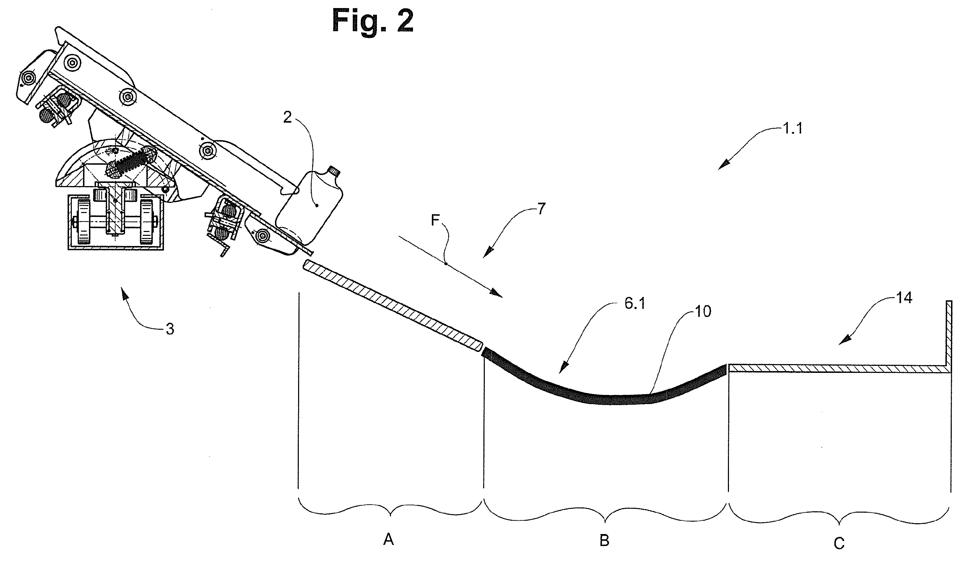

Die Stückgüter 2 werden, wie in Figur 2 gezeigt, von einem Kippschalenförderer 3 an eine Abgabestelle abgegeben und von der Abgabestelle der Förderrutsche der Zufördervorrichtung 7 im Zuförderbereich A übergeben. Selbstverständlich kann anstelle eines Kippschalenförderers 3 auch ein anderer Förderer wie z. B. ein Greiferförderer oder Bandförderer vorgesehen sein.

Im Anschluss an die Förderrutsche 7 bzw. dem Zuförderbereich A ist ein Verzögerungsbereich B mit einer Stückgutauflage 6.1, 6.2 angeordnet.

Die über die Förderrutsche 7 der Stückgutauflage 6.1, 6.2 insbesondere einzeln zugeförderten Stückgüter 2 werden abgebremst und auf der Stückgutauflage 6.1, 6.2 aufgefangen bzw. aufgenommen.

Der Verzögerungsbereich B umfasst im Weiteren einen Fördermechanismus 8.1, 8.2, mittels welchem die Stückgüter 2 insbesondere einzeln und kontrolliert dem Sammelbereich C zugefördert werden.

Der Sammelbereich C enthält hierzu einen Sammeltisch 14, auf welchem die zugeförderten Stückgüter 2 gesammelt werden.

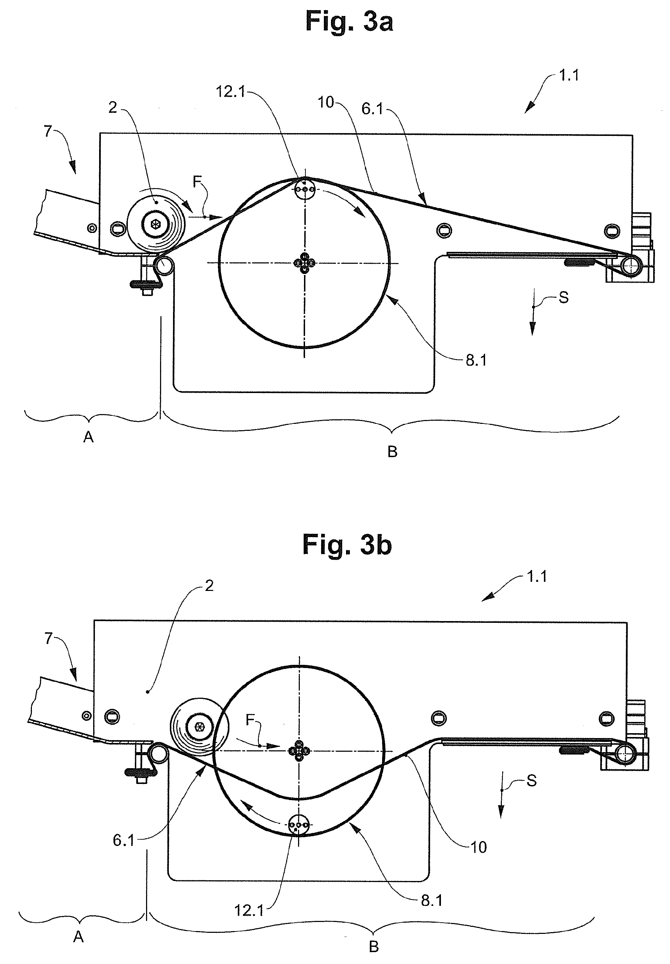

Gemäss der Ausführungsform nach der ersten Ausführungsvariante (Figuren 1, 2 sowie 3a-d) ist die Stückgutauflage 6.1 ein flexibles, flächenförmiges Band. Das Band 6.1 bildet zwecks Aufnahme eines insbesondere einzelnen Stückgutes 2 im Verzögerungsbereich B zwischen zwei Stütz- bzw. Befestigungsstellen einen frei durchhängenden Bereich mit einer Aufnahmemulde 10 aus (siehe Figur 3b).

Unterhalb des Bandes 6.1 ist ein Fördermechanismus 8.1 mit einem Vortriebsorgan 12.1 in Form einer in radialem Abstand um eine Achse rotierenden Kurbel bzw. Arm angeordnet.

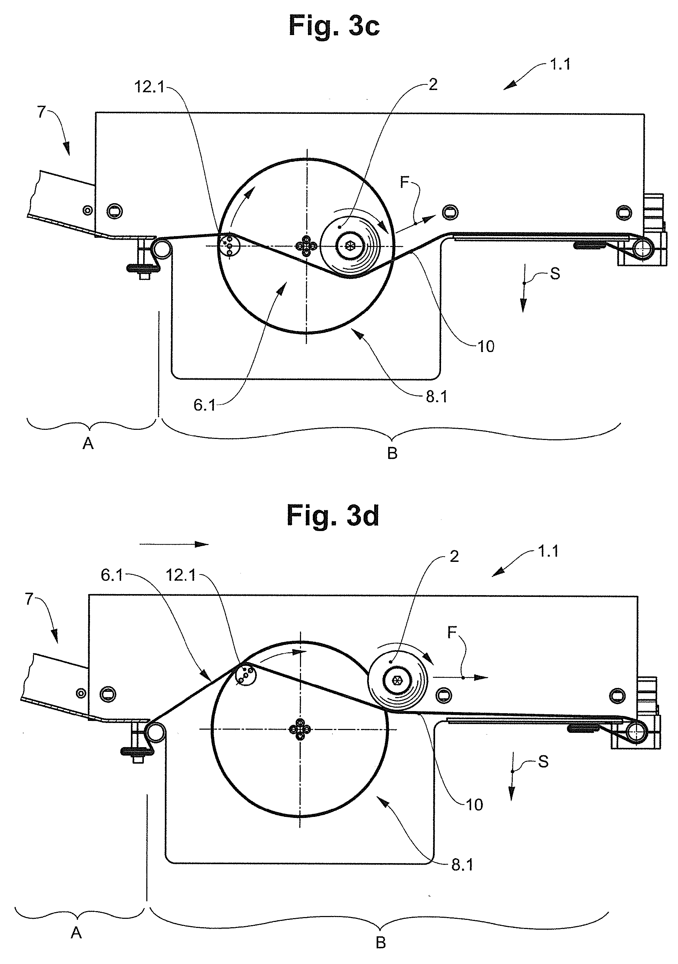

Die Kurbel bzw. der Arm 12.1 wird in einer Rotationsbewegung im Bereich der Aufnahmemulde 10 zum Band 6.1 hoch bewegt. Die Kurbel bzw. der Arm 12.1 hebt bei fortgeführter Rotationsbewegung das Band 6.1 in Förderrichtung F betrachtet hinter der tiefsten Stelle der Aufnahmemulde 10 an (siehe Figur 3c).

Durch das Anheben des Bandes 6.1 gelangt das Stückgut 2 in der Aufnahmemulde 10 in einen geneigten Muldenabschnitt und wird dadurch schwerkraftbedingt in Förderrichtung F in Bewegung versetzt (siehe Figur 3d). Da sich der Hebevorgang des Bandes 6.1 in Förderrichtung F fortpflanzt, bewegt sich auch der geneigte Muldenabschnitt und mit diesem das Stückgut 2 in Förderrichtung F fort.

Das Stückgut 2 wird auf diese Weise dem Sammelbereich C der Sammeleinrichtung 1.1 zugefördert und diesem übergeben (siehe Figur 3d).

Durch die Rotationsbewegung erreicht die Kurbel bzw. der Arm 12.1 im Laufe ihrer bzw. seiner förderaktiven Bewegung einen höchsten Punkt, in welchem das Band 6.1 maximal angehoben ist (siehe Figur 3a).

In einem nachfolgenden Bewegungsabschnitt der förderaktiven Bewegung wird die Kurbel bzw. der Arm 12.1 wieder nach unten bewegt. Zu diesem Zeitpunkt kann bereits das nächste Stückgut 2 dem Verzögerungsbereich B zugefördert werden.

Nach Abschluss der förderaktiven Bewegung wird die Kurbel bzw. der Arm 12.1 weiter nach unten bewegt und bei fortgeführter Rotationsbewegung mit einer Bewegungskomponente entgegen der Förderrichtung F in die Ausgangsstellung weiter bewegt. Das Band 6.1 nimmt nach Abschluss der förderaktiven Bewegung unter erneuter Ausbildung der Aufnahmemulde 10 wieder seine ursprüngliche Lage ein (siehe Figur 3b).

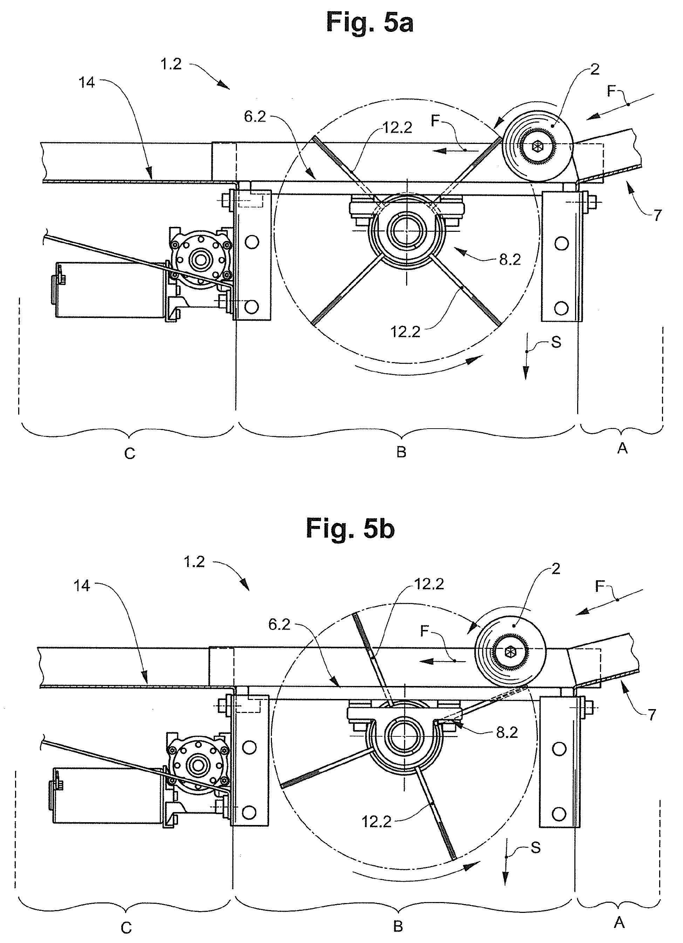

Gemäss der Ausführungsform nach der zweiten Ausführungsvariante (Figur 4 und 5a-d) ist die Stückgutauflage 6.2 ein Auflagerost mit einer Mehrzahl von nebeneinander und voneinander beabstandet angeordneten Schlitzöffnungen 11.

Der Fördermechanismus 8.2 enthält mehrere Vortriebsorgane 12.2, welche durch eine Mehrzahl von um eine Achse rotierend angeordneten Bürstenleisten ausgebildet werden. Die Bürstenleisten enthalten einzelne Vortriebselemente 13 in Form von Borsten.

Die Bürstenleisten 12.2 werden zwecks Förderung eines, dem Auflagerost 6.2 aufliegenden Stückgutes 2 zum Sammelbereich C hin um die Achse in Rotation versetzt. Dabei wird eine Bürstenleiste 12.2 in Förderrichtung F betrachtet hinter dem Stückgut 2 durch die Schlitzöffnungen 11 über die Auflagefläche des Auflagerostes 6.2 hoch bewegt (siehe Figur 5b).

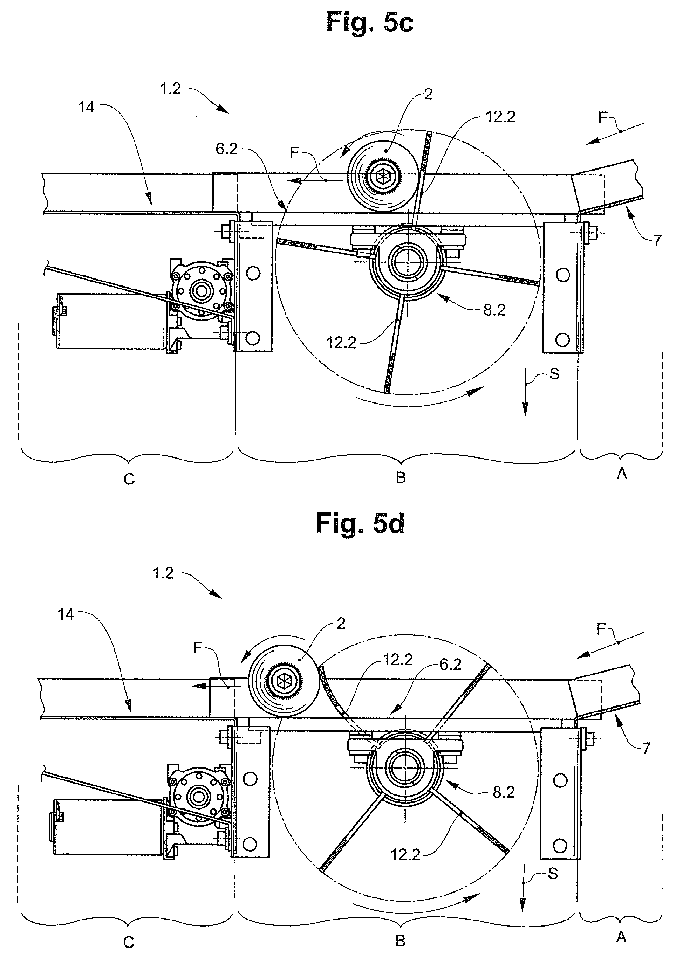

Da die Rotationsbewegung der Bürstenleiste 12.2 auch eine horizontale Bewegungskomponente in Förderrichtung F enthält, wird die Bürstenleiste 12.2 gleichzeitig in Förderrichtung F betrachtet von hinten an das Stückgut 2 heran bewegt und geht mit diesem einen Förderkontakt ein (siehe Figur 5c).

Die Bürstenleiste 12.2 schiebt nun das Stückgut 2 in Fortführung der Rotationsbewegung bzw. förderaktiven Bewegung in Förderrichtung F vom Auflagerost 6.2 weg zum Sammelbereich C hin (siehe Figur 5d).

Durch die Rotationsbewegung der Bürstenleiste 12.2 erreicht diese im Laufe ihrer förderaktiven Bewegung einen höchsten Punkt, in welchem die Bürstenleiste 12.2 maximal über die Auflagefläche hinausragt (siehe Figur 5c).

In einem nachfolgenden Bewegungsabschnitt der förderaktiven Bewegung wird die Bürstenleiste 12.2 wieder nach unten bewegt, wobei diese bis Erreichen des Niveaus der Auflagefläche immer noch eine förderaktive Bewegung ausübt (siehe Figur 5d).

Sobald die Bürstenleiste 12.2. bei fortgeführter Rotationsbewegung wieder unterhalb der Auflagefläche angeordnet ist, ist die förderaktive Bewegung abgeschlossen.

Die Bürstenleiste 12.2 wird nun bei fortgeführter Rotationsbewegung mit einer horizontalen Bewegungskomponente entgegen der Förderrichtung F in die Ausgangsstellung weiter bewegt.

## Patentansprüche

1. Sammeleinrichtung (1.1, 1.2) zum Sammeln von Stückgütern (2), welche von einem Förderer (3) an eine Abgabestelle (4) abgegeben werden,
**dadurch gekennzeichnet, dass**
die Sammeleinrichtung (1.1, 1.2) folgende Bereiche ausbildet:
- einen Sammelbereich (C) mit einer Sammelvorrichtung (5), in welchem die Stückgüter (2) gesammelt werden;
- einen dem Sammelbereich (C) vorausgehenden Verzögerungsbereich (B) mit einer Stückgutauflage (6.1, 6.2), in welchem die vom Förderer (3) abgegebenen Stückgüter (2) aufgehalten werden, und
- einen dem Verzögerungsbereich (B) vorausgehenden Zuführbereich (A) mit einer Zuführvorrichtung (7), über welchen die Stückgüter (2) von der Abgabestelle dem Verzögerungsbereich (B) zugeführt werden,
wobei der Verzögerungsbereich (B) einen Fördermechanismus (8.1, 8.2) umfasst, welcher in der Lage ist, das aufgehaltene Stückgut (2) mittels einer förderaktiven Bewegung vom Verzögerungsbereich (B) in den Sammelbereich (C) zu fördern.

2. Sammeleinrichtung nach Anspruch 1, **dadurch gekennzeichnet, dass** der Fördermechanismus (8.1, 8.2) mindestens ein förderaktives Vortriebsorgan (12.1, 12.2) aufweist, welches mittels einer förderaktiven Bewegung so wirkt, dass das aufgehaltene Stückgut (2) in Förderrichtung (F) weiterbewegt wird.

3. Sammeleinrichtung nach Anspruch 2, **dadurch gekennzeichnet, dass** das mindestens eine förderaktive Vortriebsorgan (12.1, 12.2) zur Ausführung einer zyklischen Bewegung ausgelegt ist.

4. Sammeleinrichtung nach einem der Ansprüche 1 bis 3, **dadurch gekennzeichnet, dass** die Stückgutauflage (6.1) eine Krümmung mit einem ansteigenden Krümmungsabschnitt, insbesondere eine Aufnahmemulde (10) für das Stückgut (2), ausbildet.

5. Sammeleinrichtung nach Anspruch 4, **dadurch gekennzeichnet, dass** die Stückgutauflage (6.1) ein flexibles, flächenförmiges Auflageorgan ist.

6. Sammeleinrichtung nach Anspruch 5, **dadurch gekennzeichnet, dass** der Fördermechanismus (8.1) dazu ausgelegt ist, das flexible, flächenförmige Auflageorgan (6.1) während seiner förderaktiven Bewegung im Bereich der Krümmung, insbesondere der Aufnahmemulde (10), so anzuheben, dass ein in im Bereich der Krümmung, insbesondere in der Aufnahmemulde (10) angeordnetes Stückgut (2) durch das Anheben des Auflageorgans (6.1) in Förderrichtung (F) weitergefördert wird.

7. Sammeleinrichtung nach Anspruch 5 oder 6, **dadurch gekennzeichnet, dass** der Fördermechanismus (8.1) dazu ausgelegt ist, das flexible, flächenförmige Auflageorgan (6.1) wellenartig zu bewegen.

8. Sammeleinrichtung nach einem der Ansprüche 2 bis 4, **dadurch gekennzeichnet, dass** die Stückgutauflage (6.2) mindestens eine Ausnehmung (11) aufweist, durch welche das mindestens eine förderaktive Vortriebsorgan (12.1, 12.2) während der Ausführung einer förderaktiven Bewegung auf das Stückgut (2) wirkt.

9. Sammeleinrichtung nach Anspruch 8, **dadurch gekennzeichnet, dass** das mindestens eine förderaktive Vortriebsorgan (12.2) eine Mehrzahl von quer zur Förderrichtung (F) voneinander beabstandet angeordnete Vortriebselemente (13) enthält, welche jeweils durch eine Ausnehmung (11) in der Stückgutauflage (6.2) wirken.

10. Sammeleinrichtung nach einem der Ansprüche 8 bis 9, **dadurch gekennzeichnet, dass** die Ausnehmungen (11) parallel zur Förderrichtung (F) ausgerichtete Schlitzöffnungen sind.

11. Sortieranlage mit einem Förderer (3) und mit mindestens einer Sammeleinrichtung (1) nach einem der Ansprüche 1 bis 10.

12. Verfahren zum Sammeln von Stückgütern (2), welche von einem Förderer (3) an eine Abgabestelle einer Sammeleinrichtung (1), insbesondere einer Sammeleinrichtung (1) nach einem der Ansprüche 1 bis 10, abgegeben werden, **gekennzeichnet durch** folgende Schritte:
- Zuführen eines Stückgutes (2) von der Zuführvorrichtung eines Zuführbereichs (A) zur Stückgutauflage (6.1, 6.2) eines Verzögerungsbereichs (B) und Aufhalten des Stückgutes (2) im Verzögerungsbereich (B);
- Einwirken auf das Stückgut (2) mittels eines, im Verzögerungsbereich (B) eine förderaktive Bewegung ausführenden Fördermechanismus (8.1, 8.2), wodurch das Stückgut (2) von der Stückgutauflage (6.1, 6.2) im Verzögerungsbereich (B) in einen Sammelbereich (C) gefördert wird.

13. Verfahren nach Anspruch 12, **dadurch gekennzeichnet, dass** der Fördermechanismus (8.1, 8.2) mindestens ein förderaktives Vortriebsorgan (12.1, 12.2) umfasst, und das mindestens eine förderaktive Vortriebsorgan (12.1, 12.2) in Förderrichtung (F) betrachtet während seiner förderaktiven Bewegung hinter dem auf der Stückgutauflage (6.1, 6.2) aufgehaltenen Stückgut (2) mit einer entgegen der Schwerkraft (S) gerichteten, vertikalen Bewegungskomponente und mit einer in Förderrichtung (F) gerichteten horizontalen Bewegungskomponente zum Stückgut (2) hin bewegt wird.

14. Verfahren nach Anspruch 12 oder 13, **dadurch gekennzeichnet, dass** der Fördermechanismus (8.1, 8.2) mindestens ein förderaktives Vortriebsorgan (12.1, 12.2) enthält, welches während seiner förderaktiven Bewegung in einem Rundlauf entlang einer geschlossenen Bewegungsbahn bewegt wird, insbesondere um eine Achse rotiert.

15. Verfahren nach einem der Ansprüche 12 bis 14, **dadurch gekennzeichnet, dass** die Stückgutauflage (6.1) ein flexibles, flächenförmiges Auflageorgan ist, welches eine Krümmung mit einem ansteigenden Krümmungsabschnitt, und insbesondere eine Aufnahmemulde (10) für das Stückgut (2) ausbildet, und der Fördermechanismus (8.1) das flexible, flächenförmige Auflageorgan (6.1) durch die förderaktive Bewegung im Bereich der Krümmung anhebt, und so ein im Bereich der Krümmung, insbesondere in der Aufnahmemulde (10) angeordnetes Stückgut (2) durch das Anheben des Auflageorgans (6.1) in Förderrichtung (F) fördert.

16. Verfahren nach einem der Ansprüche 12 bis 14, **dadurch gekennzeichnet, dass** die Stückgutauflage (6.2) Ausnehmungen (11) aufweist, durch welche das mindestens eine förderaktive Vortriebsorgan (12.2) des Fördermechanismus (8.2) in Förderrichtung (F) betrachtet in Ausführung der förderaktiven Bewegung hinter einem auf der Stückgutauflage (6.2) aufgehaltenen Stückgut (2) bewegt wird.

17. Verfahren nach einem der Ansprüche 12 bis 16, **dadurch gekennzeichnet, dass** das mindestens eine förderaktive Vortriebsorgan (12.1, 12.2) direkt oder indirekt auf das Stückgut (2) wirkt.
